(19) Europäisches Patentamt / European Patent Office / Office européen des brevets

(11) **EP 4 082 990 A1**

(12) **DEMANDE DE BREVET EUROPEEN**


(43) Date de publication:
**02.11.2022 Bulletin 2022/44**

(21) Numéro de dépôt: **22169533.1**

(22) Date de dépôt: **22.04.2022**

(51) Classification Internationale des Brevets (IPC):
***C04B 35/26*** *(2006.01)* ***C04B 35/626*** *(2006.01)*
***C04B 35/638*** *(2006.01)* ***H01Q 7/08*** *(2006.01)*

(52) Classification Coopérative des Brevets (CPC):
**C04B 35/265; C04B 35/2666; C04B 35/6262; C04B 35/638; H01Q 7/08;** C04B 2235/3275; C04B 2235/3279; C04B 2235/3281; C04B 2235/3284; C04B 2235/5427; C04B 2235/6567; C04B 2235/763; C04B 2235/96

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **28.04.2021 FR 2104412**



(71) Demandeur: **Exxelia**
**75011 Paris (FR)**

(72) Inventeur: **UL, Rémy**
**33600 PESSAC (FR)**

(74) Mandataire: **Lavoix**
**2, place d'Estienne d'Orves**
**75441 Paris Cedex 09 (FR)**


(54) **FERRITE DE NICKEL ZINC CUIVRE POUR APPLICATION ANTENNE VUHF**


(57) La présente invention concerne une composition et un matériau solide, spécialement adaptés pour la fabrication d'une antenne adaptée à fonctionner dans la bande des très hautes fréquences et ultra hautes fréquences ou V/UHF, ainsi qu'un procédé de fabrication et leurs utilisations. La composition présente la formule $Ni_aZn_bCu_cCO_dFe_{2-\delta}O_4$, dans laquelle :

$$2(a+b+c+d) + 3(2-\delta) = 8$$

$0,05 < b < 0,5$, par exemple de $0,1 < b < 0,5$, par exemple de $0,1 < b < 0,4$, par exemple $0,15 < b < 0,35$
$0,10 < c < 0,25$, de préférence $0,15 < c < 0,25$, selon une variante c vaut 0,20,
$0,04 < d < 0,25$, de préférence $0,06 < d < 0,25$, et encore de préférence $0,07 < d < 0,25$, et
$\delta < 0,05$.


EP 4 082 990 A1

## Description

La présente invention concerne une composition et un matériau solide, spécialement adaptés pour la fabrication d'une antenne adaptée à fonctionner dans la bande des très hautes fréquences (VHF, « *very high frequency* » en anglais), comprise entre 30 MHz et 300 MHz, et ultra hautes fréquences (UHF, « *ultra high frequency* » en anglais) comprise entre 300 MHz et 3 GHz, ou V/UHF, ainsi qu'un procédé de fabrication et leurs utilisations.

## Etat de la technique

Le caractère miniature d'une antenne constitue un enjeu majeur, spécialement pour des antennes fonctionnant en dessous du GHz. En effet, la taille d'une antenne est directement proportionnelle à la longueur d'onde du signal émis/reçu, et celle-ci est de l'ordre du mètre pour les fréquences VHF/UHF (VHF : 30 MHz à 300 MHz ; UHF : 300 MHz à 3000 MHz). Aujourd'hui, une des stratégies généralement utilisé pour réduire les dimensions géométriques d'une antenne est d'utiliser un matériau diélectrique avec une forte valeur de constante diélectrique ($\varepsilon'$). Cependant, l'utilisation de tels matériaux conduit à une baisse de performance de l'antenne (gain, bande passante).

Cette limitation peut être contournée en utilisant des matériaux magnéto-diélectriques comme les ferrites. En effet, l'utilisation de matériaux ayant une perméabilité ($\mu'$) élevée permettrait de réduire la taille des antennes tout en maximisant leur efficacité. En effet, bien que $\varepsilon'$ ait un impact positif sur les pertes diélectriques et sur la quantité d'énergie stocké, il a été prouvé que : (i) $\varepsilon'$ a un impact négatif sur la bande passante ainsi que sur l'efficacité de l'antenne et (ii) $\mu'$ a l'effet opposé et a donc un impact positif sur ces deux paramètres. De plus, si on conserve l'antenne à iso-dimension, un tel matériau permettrait d'augmenter ses performances (M.A.C Niamien, S. Collardey, A. Sharaiha, K. Mahdjoubi," Compact Expressions for Efficiency and Bandwidth of Patch Antennas Over Lossy Magneto-Dielectric Materials," IEEE antennas and wireless propaga. letters,10 (2011) 63-66).

Il est généralement connu depuis longtemps que l'ajout de faibles concentrations de cobalt dans des ferrites et en particulier dans des ferrites de nickel-zinc permette d'avoir un effet positif sur les pertes magnétiques du composé. On peut ainsi citer comme exemple l'étude de Lau and Stuijts (J.G.M Lau and A.L. Stuijts, Chimical Composition and High-Frequency Properties of Ni-Zn-Co Ferrites, Philips Res. Repts, 21 (1966) 104-112) qui présente des mécanismes du comportement des ions cobalt dans la structure cristalline du $(Ni_{0,8}Zn_{0,2})_{0,97-x}Co_{0,03}Fe_2O_{4+\gamma}$. Il existe un grand nombre d'étude se concentrant sur des ferrites de nickel-zinc substitué cobalt. Cependant, les compositions en question ne comportent pas de cuivre et présentent des performances en terme de pertes magnétiques à haute fréquence (Fréquence F > 100 MHz) très inférieures à celles visées par la présente invention. Certaines des compositions parviennent à présenter un comportement stable en terme de perméabilité magnétique. Cependant, elles présentent le problème que la résonance ferrimagnétique apparait à trop basse fréquence et provoque une augmentation des pertes magnétiques dès la dizaine de MHz.

Il existe à l'échelle du laboratoire certains matériaux ferrite de base nickel-zinc qui présentent des performances similaires à l'invention. Ainsi, l'équipe de Mathur *et al.* a publié en 2010 une composition de ferrite permettant une utilisation à haute fréquence (P. Mathur, A. Thakur, J.H. Lee, M. Singh, Sustained electromagnetic properties of Ni-Zn-Co nanoferrites for the high-frequency applications, Materials Letters, 64 (2010) 2738-2741). En effet, le matériau développé présente des pertes magnétiques faibles (tangente de perte d'environ 0,05) sur une bande de fréquence s'étalant entre 10 et 200 MHz ainsi qu'une perméabilité magnétique $\mu'$ d'environ 9. La composition du matériau présenté est la suivante : $Ni_{0.49}Zn_{0.49}Co_{0.02}Fe_2O_4$. Le taux de cobalt étant faible (0,02 mol), les auteurs ont utilisé une autre méthode pour repousser la résonance après 200 MHz. Ils se sont servis d'une méthode de synthèse du composé par co-précipitation pour synthétiser des particules de l'ordre d'environ 50 nm et ont fritté leur matériau à plus basse température pour éviter une croissance cristalline trop importante. Le matériau possède ainsi une microstructure fine qui permet de changer la cinétique de mouvement des parois de domaine magnétique afin de repousser la résonance. La méthode de synthèse par co-précipitation est très différente de la méthode de synthèse classique. Elle est de plus coûteuse et compliquée à mettre en place d'un point de vue industriel.

L'équipe de Saini *et al.* (A. Saini, A. Thakur, P. Thakur, Matching permeability and permittivity of Ni0.5Zn0.3Co0.2In0.1Fe1.9O4 ferrite for substrate of large bandwidth miniaturized antenna, J Mater Sci: Mater Electron, 27 (2016) 2816-2823) montre l'intérêt de la composition $Ni_{0.5}Zn_{0.3}Co_{0.2}In_{0.1}Fe_{1.9}O_4$ pour la miniaturisation des antennes en UHF avec un gain en bande passante si on compare à une antenne chargée avec un simple matériau diélectrique. Ce matériau est synthétisé par co-précipitation est possède un fort taux de cobalt (0,2 mol). Il présente une perméabilité magnétique d'environ 5 - 6 et de faibles pertes magnétique jusqu'à au moins 500 - 600 MHz.

Enfin, on peut également citer les travaux menés au sein du laboratoire Lab-STICC de Brest (France) qui se concentrent sur la fabrication d'un matériau magnéto-diélectrique par co-précipitation pouvant répondre aux besoins antennaires sur les bandes de fréquence V/UHF. Plusieurs résultats ont été publiés qui démontrent l'intérêt de l'utilisation de la méthode de co-précipitation sur des composés tel que $Ni_{0,5}Zn_{0,3}Co_{0,2}Fe_{1.98}O_{4-\delta}$ pour atteindre de faibles pertes magnétiques à haute fréquence tout en conservant une perméabilité relativement élevée.

Les ferrites de nickel-zinc-cuivre sont beaucoup utilisés pour les inductances. Les constructeurs tirent parti de la faible température de frittage de ce composé (< 1000 °C) octroyée par le pourcentage élevé de cuivre (généralement entre 0,2 et 0,25 mol) pour co-fritter le ferrite avec les électrodes ou le bobinage directement. Il a été reporté que lorsque du cuivre est ajouté dans un composé tel $Ni_{0.8-x}Zn_{0.2}Cu_xFe_2O_4$, un optimum existe pour un ajout de cuivre de 0,2 mol (J.J. Shrotri, S.D. Kulkarni, C.E. Deshpande, A. Mitra, S.R. Sainkar, P.S. Anil Kumar, S.K. Date, Effect of Cu substitution on the magnetic and electrical properties of Ni-Zn ferrite synthesised by soft chemical method, Materials Chemistry and Physics, 59 (1999) 1-5). Pour des valeurs trop importantes ($x \geq 0,3$ mol), le cuivre forme une seconde phase $CuO/CuFeO_4$ et les propriétés du matériau se dégradent.

Beaucoup d'études présentent des ferrites Ni-Zn-Cu avec un comportement à haute fréquence intéressant. Cependant, les fréquences considérées sont bien souvent trop basses pour les applications visées par l'invention. Ce type de matériau présente généralement une résonnance ferrimagnétique entre 1 et 100 MHz. De plus, l'apparition de la résonnance s'accompagne d'une augmentation des pertes magnétiques (représenté par la valeur $\mu''$ ou *tan* $\delta_\mu$) rendant le matériau inutilisable comme matériau d'antenne sur des bandes de fréquence s'étendant au-delà de cette résonnance.

## Buts de l'invention

La présente invention a pour but de résoudre le problème technique consistant à fournir une composition utile comme antenne VHF ou V/UHF.

En particulier, la présente invention a pour but de résoudre le problème technique consistant à fournir une composition utile comme antenne VHF ou V/UHF miniaturisée.

La présente invention a notamment pour but de résoudre le problème technique consistant à fournir une composition de ferrite nickel-zinc-cuivre pouvant être utilisée comme matériau d'antenne, de préférence miniaturisée, sur des bandes de fréquence VHF et/ou UHF.

La présente invention a notamment pour but de résoudre le problème technique consistant à fournir une composition utile comme antenne, de préférence miniaturisée, pour laquelle la résonnance apparait au-delà de 50 MHz, de préférence au-delà de 70 MHz, et de préférence au-delà de 100 MHz, ou encore de préférence à une fréquence supérieure.

La présente invention a notamment pour but de résoudre le problème technique consistant à fournir une composition magnéto-diélectrique possédant de préférence une perméabilité magnétique $\mu' \geq 5$ et une permittivité diélectrique $\varepsilon' \geq 10$, avec de préférence une perméabilité magnétique proche de la permittivité diélectrique.

La présente invention a également pour but de résoudre le problème technique consistant à fournir un procédé de fabrication d'une telle composition, de préférence par un procédé industriel classique de préparation de matériau céramique par broyage/chamottage.

## Description détaillée de l'invention

Il a été découvert par les inventeurs que l'utilisation d'une composition conforme à la présente invention, présentant un fort taux de cobalt combinée à un fort taux de cuivre dans une composition de ferrite de nickel-zinc permettait de résoudre au moins l'un, et de préférence l'ensemble, des problèmes techniques précités.

Il a été découvert par les inventeurs que l'utilisation d'une composition conforme à la présente invention en augmentant le rapport Ni/Zn permettait de fournir une composition avantageuse pour résoudre au moins l'un, et de préférence l'ensemble, des problèmes techniques précités.

Avantageusement, une telle composition peut être obtenue en introduisant du cobalt en substitution partielle du nickel dans une composition de ferrite de d'alliage de formule $Ni_aZn_bCu_cCo_dFe_{2-\delta}O_4$.

L'invention concerne une composition de formule $Ni_aZn_bCu_cCo_dFe_{2-\delta}O_4$, dans laquelle :

$$2(a+b+c+d) + 3(2-\delta) = 8$$

$0,05 < b < 0,5$, par exemple de $0,1 < b < 0,5$, par exemple de $0,1 < b < 0,4$.
$0,10 < c < 0,25$, de préférence $0,15 < c < 0,25$, selon une variante c vaut 0,20,
$0,04 < d < 0,25$, de préférence $0,06 < d < 0,25$, et encore de préférence $0,07 < d < 0,25$, et
$\delta < 0,05$.

Avantageusement, la composition est un ferrite de nickel zinc cuivre, de préférence présentant un rapport Ni/Zn de 1 à 15.

Avantageusement, la composition présente une structure spinelle.

L'invention concerne un matériau ferrite de nickel-zinc-cuivre de structure spinelle pouvant être utilisés comme matériau d'antenne sur des bandes de fréquence VUHF.
Selon un mode de réalisation, « b » est supérieur ou égal à 0,05.
Selon un mode de réalisation, « b » est supérieur ou égal à 0,1.
Selon un mode de réalisation, « b » est inférieur ou égal à 0,5.
Selon un mode de réalisation, « b » est inférieur ou égal à 0,4.
Selon un mode de réalisation, « b » est inférieur ou égal à 0,35.
Avantageusement, l'une quelconque des bornes inférieures énoncées peut être combinée avec l'une quelconque des bornes supérieures énoncées.
Selon un mode de réalisation, $0,05 < b < 0,5$,
**[0030]** Selon un mode de réalisation, $0,1 < b < 0,5$.
Selon un mode de réalisation, $0,1 < b < 0,4$.
Selon un mode de réalisation, $0,15 < b < 0,35$.
Selon un mode de réalisation, « c » est supérieur ou égal à 0,10.
Selon un mode de réalisation, « c » est supérieur ou égal à 0,15.
Selon un mode de réalisation, « c » est inférieur ou égal à 0,25.
Avantageusement, l'une quelconque des bornes inférieures énoncées peut être combinée avec l'une quelconque des bornes supérieures énoncées.
Selon un mode de réalisation, $0,10 < c < 0,25$, de préférence $0,15 < c < 0,25$, selon une variante c vaut 0,20.
Selon un mode de réalisation, « d » est supérieur ou égal à 0,04.
Selon un mode de réalisation, « d » est supérieur ou égal à 0,05.
Selon un mode de réalisation, « d » est supérieur ou égal à 0,06.
Selon un mode de réalisation, « d » est supérieur ou égal à 0,07.
Selon un mode de réalisation, « d » vaut 0,10.
Selon un mode de réalisation, « d » est inférieur ou égal à 0,25.
Avantageusement, l'une quelconque des bornes inférieures énoncées peut être combinée avec l'une quelconque des bornes supérieures énoncées.
Selon un mode de réalisation, $0,04 < d < 0,25$.
De préférence, $0,06 < d < 0,25$.
Avantageusement, $0,07 < d < 0,25$.
Avantageusement, $0,09 < d < 0,25$
Selon un mode de réalisation, « a » est supérieur ou égal à 0,3.
Selon un mode de réalisation, « a » est supérieur ou égal à 0,35.
Selon un mode de réalisation, « a » est supérieur ou égal à 0,4.
Selon un mode de réalisation, « a » est inférieur ou égal à 0,8.
Selon un mode de réalisation, « a » est inférieur ou égal à 0,7.
Selon un mode de réalisation, « a » est inférieur ou égal à 0,6.
Avantageusement, l'une quelconque des bornes inférieures énoncées peut être combinée avec l'une quelconque des bornes supérieures énoncées.
Selon un mode de réalisation, $0,3 < a < 0,7$
Selon un mode de réalisation, $0,4 < a < 0,7$.
Avantageusement, la composition est choisie parmi les compositions de formule suivantes :

$$Ni_{0,5005}Zn_{0,3195}Cu_{0,20}Co_{0,04}Fe_{1,96}O_4,$$

$$Ni_{0,4805}Zn_{0,3195}Cu_{0,20}Co_{0,06}Fe_{1,96}O_4,$$

$$Ni_{0,4405}Zn_{0,3195}Cu_{0,20}Co_{0,10}Fe_{1,96}O_4,$$

$$Ni_{0,4347}Zn_{0,3153}Cu_{0,20}Co_{0,11}Fe_{1,96}O_4,$$

$$Ni_{0,4231}Zn_{0,3069}Cu_{0,20}Co_{0,13}Fe_{1,96}O_4,$$

$$Ni_{0,4115}Zn_{0,2985}Cu_{0,20}Co_{0,15}Fe_{1,96}O_4, \text{ et}$$

$$Ni_{0,6}Zn_{0,2}Cu_{0,20}Co_{0,06}Fe_{1,96}O_4.$$

Selon un mode de réalisation, le rapport Ni/Zn de 1 à 15 de préférence de 1 à 10, et encore de préférence de 1,2 à 7.

Avantageusement, le rapport Ni/Zn est supérieur à 2.

Selon une variante ce rapport vaut 1,38 et selon une autre variante ce rapport vaut 3.

L'invention concerne aussi un matériau solide présentant une composition telle que définie selon la présente invention.

Selon un mode de réalisation, le matériau selon la présente invention forme un matériau magnéto-diélectrique, de préférence possédant une perméabilité magnétique $\mu' > 1$ et une permittivité diélectrique $\varepsilon' > 1$, et de préférence $\mu' \geq 5$ et $\varepsilon' \geq 10$.

Selon un mode de réalisation, le matériau selon la présente invention présente une perméabilité magnétique $\mu'$ de 10 à 20 pour la gamme VHF (1 MHz à 300 MHz) ou $\mu'$ de 5 à 15 pour la gamme V/UHF (200 MHz à 600 MHz).

Selon un mode de réalisation, le matériau selon la présente invention présente des pertes magnétiques $\tan(\delta_\mu) < 0,06$, et de préférence des pertes diélectriques $\tan(\delta_\varepsilon) < 0,02$ sur la bande de fréquence entre 100 et 200 MHz.

Selon un mode de réalisation, $\tan(\delta_\varepsilon) < 0,006$.

L'invention concerne en outre une antenne VHF ou V/UHF présentant une composition ou un matériau solide tel que défini selon la présente invention.

Selon un mode de réalisation, l'antenne est une antenne VHF ou V/UHF de type antenne imprimée ou micro-ruban ou "patch" en anglais comprenant une ou plusieurs couches d'un substrat accolé à un élément rayonnant, dont une ou plusieurs couches du substrat est constituée ou comprend une composition selon l'invention ou un matériau solide selon l'invention.

Selon un mode de réalisation, l'antenne est miniaturisée. Typiquement, l'antenne présente une plus grande dimension inférieure à 300 mm.

L'invention concerne également l'utilisation d'une composition selon l'invention ou d'un matériau solide selon l'invention, comme antenne VHF ou V/UHF.

Avantageusement, l'invention concerne une antenne pour l'aéronautique.

Selon un mode de réalisation, l'antenne est adaptée à un fonctionnement entre 118 MHz et 156 MHz, et de préférence entre 118 et 137 MHz.

L'invention concerne encore un procédé de fabrication d'une composition telle que définie selon la présente invention.

En particulier, l'invention concerne un procédé de fabrication d'une composition selon l'invention ou d'un matériau solide selon l'invention, ledit procédé comprenant :

un broyage des matières premières apportant Ni, Zn, Cu, Co, Fe et O, typiquement NiO ; ZnO ; CuO ; $Co_3O_4$ et $Fe_2O_3$,
après broyage, la poudre est séchée puis tamisée de préférence avec un tamis à 400 $\mu$m,
après tamisage, la poudre est traitée thermiquement, de préférence à une température d'au moins 600 °C, et par exemple de 800 °C, par exemple pendant 1 à 10 h, typiquement 2 h,
après traitement thermique, la poudre subit un deuxième broyage, par exemple avec une mise en solution aqueuse, puis la poudre est mise en forme pour obtenir un matériau solide.

Selon un mode de réalisation, avant mise en forme le procédé comprend un enrobage de la poudre avec un liant pour fournir un matériau mis en forme.

Selon un mode de réalisation, après mise en forme le procédé comprend un frittage du matériau mis en forme.

Avantageusement, le matériau est synthétisé selon un procédé de préparation d'un matériau céramique.

Selon un mode de réalisation, l'étape de broyage des matières premières comprend ou consiste en la pesée des différents oxydes permettant de réaliser la composition : NiO ; ZnO ; CuO ; $Co_3O_4$ et $Fe_2O_3$. Pour tenir compte de l'apport d'impuretés de fer lors du procédé de broyage, un défaut en oxyde de fer est introduit dès cette pesée. Selon un mode de réalisation, les matières premières sont ensuite mélangées puis broyées en voie aqueuse (typiquement durant 20 h pour un broyage en jarre) avec un équipement de broyage, tel que par exemple un broyeur à boulets, un broyeur en attrition, un tourne-jarre, etc.

Selon un mode de réalisation, après broyage, la poudre est séchée puis tamisée à 400 $\mu$m. Elle est ensuite traitée thermiquement (« chamottée ») au four à 800 °C pendant 2 h.

Selon un mode de réalisation, la poudre fait l'objet d'un second broyage. Par exemple, la poudre est tamisée puis mis en barbotine aqueuse, c'est-à-dire diluée dans une solution aqueuse, typiquement de l'eau, pour un rebroyage (typiquement d'une durée de 36 h pour un broyage en jarre).

Selon un mode de réalisation, la poudre est enrobée avec un liant puis mise en forme par pressage.

Avantageusement, un enrobage de la poudre a lieu afin de permettre la mise en forme de celle-ci. L'ajout de liant peut se faire durant le second broyage par ajout à la barbotine ou après broyage une fois que la poudre est sèche et tamisée. Dans chacun des cas, la poudre est de préférence séchée puis tamisée entre 200 et 400 $\mu$m avant mise en forme.

Avantageusement, la mise en forme s'effectue par pressage (typiquement uni-axial) sous forme de plaques, de disques ou de tores en fonction du besoin.

Avantageusement, le matériau mis en forme est fritté.

Le frittage a lieu typiquement à une température supérieure à 800°C, et de préférence entre 850 et 1000°C.

Typiquement, le frittage est réalisé sous atmosphère oxydante, par exemple l'air.

Selon un mode de réalisation, le matériau pressé est fritté à 950 °C durant 2 h sous air. De préférence, avant de monter la température du four, par exemple à 950 °C, un déliantage des matériaux est effectué avec une montée lente de la température lorsqu'on se situe en dessous de 500 °C. La durée du déliantage dépend des dimensions des pièces et de leur masse et peut par exemple aller de 1 h à 48 h. Le frittage selon l'invention à une température inférieure à 1200°C et avantageusement à 950 °C, présente un avantage technique significatif. De manière général, les ferrites de structure spinelle frittent entre 1200 et 1400 °C pendant 4 à 12h. L'invention permet ainsi un gain de temps et de coût du four (dimensionnement pour des températures < 1000 °C) et de la puissance requise pour chauffer.

Avantageusement, la composition ou le matériau selon la présente invention constitue un matériau magnéto-diélectrique possédant une perméabilité magnétique proche (par exemple +/- 10 unités, de préférence +/- 5 unités) de sa permittivité diélectrique (matériaux magnéto-diélectriques : $\varepsilon' > 1$ et $\mu' > 1$).

Avantageusement, la composition ou le matériau selon la présente invention présente une résonance ferrimagnétique au-delà de 50 MHz, de préférence au-delà de 70 MHz, et de préférence au-delà de 100 MHz.

On entend par une résonance ferrimagnétique au-delà d'une certaine valeur que le pic de perméabilité magnétique se présente à une fréquence supérieure à cette valeur.

Avantageusement, la composition ou le matériau selon la présente invention présente une résonance ferrimagnétique au-delà de 120 MHz, de préférence au-delà de 140 MHz, et de préférence au-delà de 150 MHz.

Encore avantageusement, la composition ou le matériau selon la présente invention présente une résonance ferrimagnétique au-delà de 200 MHz.

Un tel avantage est lié notamment à la composition de la formule d'alliage selon l'invention.

Avantageusement, la composition et matériau selon l'invention présentent une perméabilité magnétique $\mu'$ supérieure à 10, de préférence supérieure à 15, et encore de préférence supérieure à 20, pour la gamme VHF (1 MHz à 300 MHz).

Avantageusement, la composition et matériau selon l'invention présentent une perméabilité magnétique $\mu'$ supérieure à 5, et de préférence supérieure à 10, et encore de préférence supérieure à 15, pour la gamme V/UHF (200 MHz à 600 MHz)

Avantageusement, la composition et matériau selon l'invention présentent des pertes magnétiques faibles en VHF/UHF avec tan $\delta_\mu$ inférieur à 0,05 sur la bande de fréquence de 1 à 50 MHz, de préférence de 1 à 70 MHz, et de préférence de 1 à 100 MHz.

Avantageusement, selon un mode de réalisation, la composition et matériau selon l'invention présentent des pertes magnétiques faibles en VHF/UHF avec tan $\delta_\mu$ inférieur à 0,06, et de préférence inférieur à 0,05, et encore de préférence inférieur à 0,04, sur la bande de fréquence de 100 à 200 MHz.

Avantageusement, la composition et matériau selon l'invention présentent une perméabilité magnétique modérée (typiquement $\mu'$ de 5 à 20, de préférence de 10 à 20) et des pertes magnétiques faibles en VHF/UHF (tan $\delta_\mu$ < 0,05) sur la bande de fréquence de 100 à 200 MHz.

**Sur les figures :**

La figure 1 est un graphique représentant la perméabilité magnétique et les pertes magnétiques d'un ferrite de nickel zinc classique (NZ50 où Ni/Zn vaut 1.77 et Co vaut 0.008) et d'un ferrite de nickel zinc cuivre ($Ni_{0,5005}Zn_{0,3195}Cu_{0,20}Co_{0,04}Fe_{1,96}O_4$ où Ni/Zn vaut 1.57 et Co vaut 0.04) en fonction de la fréquence.

La figure 2 est un graphique représentant la perméabilité magnétique et pertes magnétiques des ferrites NZC en fonction de la fréquence. $Ni_{0,5005}Zn_{0,3195}Cu_{0,20}Co_{0,04}Fe_{1,96}O_4$ (Ni/Zn vaut 1.57 et Co vaut 0.04) et $Ni_{0,4805}Zn_{0,3195}Cu_{0,20}Co_{0,06}Fe_{1,96}O_4$(Ni/Zn vaut 1.50 et Co vaut 0.06).

La figure 3 est un graphique représentant la perméabilité magnétique et pertes magnétiques des ferrites NZC en fonction de la fréquence ; avec $Ni_{0,4805}Zn_{0,3195}Cu_{0,20}Co_{0,06}Fe_{1,96}O_4$ (Ni/Zn vaut 1.50 et Co vaut 0.06); $Ni_{0,4405}Zn_{0,3195}Cu_{0,20}Co_{0,10}Fe_{1,96}O_4$ (Ni/Zn vaut 1.38 et Co vaut 0.1) et $Ni_{0,6}Zn_{0,2}Cu_{0,20}Co_{0,06}Fe_{1,96}O_4$ (Ni/Zn vaut 3 et Co vaut 0.06).

La figure 4 est un graphique représentant la perméabilité magnétique et pertes magnétiques des ferrites NZC en fonction de la fréquence ; avec $Ni_{0,4347}Zn_{0,3153}Cu_{0,20}Co_{0,11}Fe_{1,96}O_4$ (Ni/Zn vaut 1.38 et Co vaut 0.11); $Ni_{0,4231}Zn_{0,3069}Cu_{0,20}Co_{0,13}Fe_{1,96}O_4$ (Ni/Zn vaut 1.38 et Co vaut 0.13) et $Ni_{0,4115}Zn_{0,2985}Cu_{0,20}Co_{0,15}Fe_{1,96}O_4$ (Ni/Zn vaut 1.38 et Co vaut 0.15).

La figure 5 est un graphique représentant la perméabilité magnétique et pertes magnétiques du matériau $Ni_{0,4405}Zn_{0,3195}Cu_{0,20}Co_{0,10}Fe_{1,96}O_4$ en fonction de la fréquence.

La figure 6 est un graphique représentant la perméabilité magnétique et pertes magnétiques du matériau $Ni_{0,6}Zn_{0,2}Cu_{0,20}Co_{0,06}Fe_{1,96}O_4$ en fonction de la fréquence.

La figure 7 est un graphique représentant la permittivité et pertes diélectriques du matériau $Ni_{0,4405}Zn_{0,3195}Cu_{0,20}Co_{0,10}Fe_{1,96}O_4$ en fonction de la fréquence.

La figure 8 est un graphique représentant la permittivité et pertes diélectriques du matériau $Ni_{0,6}Zn_{0,2}Cu_{0,20}Co_{0,06}Fe_{1,96}O_4$ en fonction de la fréquence.

## Exemples

Pour évaluer le potentiel des matériaux selon l'invention, on s'intéresse principalement à l'évolution de la perméabilité et des pertes magnétiques en fréquence. On regarde ainsi le moment où les pertes augmentent (cela coïncide avec le début de la résonnance ferri-magnétique) et la valeur de la perméabilité avant la résonnance.

Les mesures de la perméabilité, de la permittivité, des pertes magnétiques et diélectriques sont réalisées entre 1 MHz et 1 GHz grâce à un analyseur d'impédance de type HP4291A.

Pour la mesure de la perméabilité et des pertes magnétiques, des échantillons sous forme de tore cylindrique brut de frittage de type APC7 sont fabriqués ($\varnothing_{ext} \leq 7$ mm ; $\varnothing_{int} \geq 3{,}05$ mm ; épaisseur ≤ 3 mm). Les mesures sont effectuées dans le montage *Keysight 16454A Magnetic Material Test Fixture.* Les références de cette mesure peuvent être trouvées sur le site internet du fabricant (document de référence : *16454A Magnetic Material Test Fixture Operation and Service Manual* et *Materials Measurement: Magnetic Materials - Application Brief* sur https://www.keysight.com/en/pd-1000000509%3Aepsg%3Apro-pn-16454A/magnetic-material-test-fixture?pm=PL&nid=536902475.536879639&cc=FR&lc=fre).

Pour la mesure de la permittivité et des pertes diélectriques, des échantillons sous forme de plaque de 10 mm de côté et d'épaisseur variable (1 ; 0,5 ; 0,3 mm) sont fabriqués. Une mesure de la capacité et du facteur de perte est alors réalisée à l'analyseur d'impédance (HP4291A) à l'aide du montage *HP Agilent Keysight 16092A Spring Clip Test Fixture* permettant la mesure entre 1 et 500 MHz.

La Figure 1 présente de telles courbes. En trait pointillé est présenté un ferrite spinelle classique (NZ50, commercialisé par EXXELIA) et on peut observer l'apparition de la résonance avant 50 MHz (pic de perméabilité à environ 20 MHz). Les pertes augmentent et rendent le matériau inutilisable comme matériau d'antenne VHF et/ou UHF. L'utilisation d'un ferrite de nickel-zinc-cuivre avec un taux de cuivre de 0,2 tel que présenté en trait plein sur la Figure 1 ($Ni_{0,5005}Zn_{0,3195}Cu_{0,20}Co_{0,04}Fe_{1,96}O_4$) permet de repousser la résonance vers des fréquences plus élevées, au-dessus de 50 MHz (pic à environ 100 MHz).

La Figure 2 présente la composition $Ni_{0,4805}Zn_{0,3195}Cu_{0,20}Co_{0,06}Fe_{1,96}O_4$. Avec un rapport Ni/Zn de 1,5 et un taux de cobalt augmenté à 0,06 on repousse la résonnance à plus haute fréquence ce qui permet d'avoir des pertes faibles ($\tan \delta_\mu < 0{,}04$) jusqu'à 100 MHz. On a ainsi un matériau utilisable comme matériau d'antenne entre 1 et 100 MHz présentant un $\mu'$ autour de 29.

La Figure 3 compare deux nouveaux matériaux à celui déjà présenté en trait plein fin/gris dans la Figure 2 (le $Ni_{0,4805}Zn_{0,3195}Cu_{0,20}Co_{0,06}Fe_{1,96}O_4$). Le premier matériau présenté en trait plein épais/noir a la composition suivante : $Ni_{0,4405}Zn_{0,3195}Cu_{0,20}Co_{0,10}Fe_{1,96}O_4$. En comparaison, le rapport Ni/Zn a été légèrement diminué (dû au fait que le fort ajout de cobalt s'est fait par substitution du nickel) mais la proportion de cobalt a été fortement augmenté à 0,1 mol. On observe ainsi l'effet direct du cobalt qui a permis de repousser la résonance après 200 MHz. L'effet similaire est observé sur le matériau présenté en trait pointillé sur la Figure 3 : le $Ni_{0,6}Zn_{0,2}Cu_{0,20}Co_{0,06}Fe_{1,96}O_4$. Comparé au matériau présenté en trait plein fin/gris, le taux de cobalt est resté le même mais le rapport Ni/Zn a été doublé. On observe ainsi que la résonance est repoussée également après les 200 MHz.

La figure 4 présente trois compositions ($Ni_{0,4347}Zn_{0,3153}Cu_{0,20}Co_{0,11}Fe_{1,96}O_4$ ; $Ni_{0,4231}Zn_{0,3069}Cu_{0,20}Co_{0,13}Fe_{1,96}O_4$ et $Ni_{0,4115}Zn_{0,2985}Cu_{0,20}Co_{0,15}Fe_{1,96}O_4$), chacune ayant un rapport Ni/Zn fixé à 1,38. Le taux de cobalt de ces compositions est fixé respectivement à 0,11 ; 0,13 et 0,15. On observe bien l'effet du cobalt qui permet une utilisation plus haut en fréquence du matériau (au-delà de 300 MHz pour la composition ayant un taux de cobalt de 0,15).

Sur les Figures 5 et 6 on se concentre sur la gamme de fréquence entre 100 et 200 MHz. Cette bande de fréquence présente un grand intérêt du fait des nombreuses applications VHF fonctionnant dans cette gamme et en particulier pour les applications aéronautiques (bande d'utilisation entre 118 et 156 MHz et plus particulièrement entre 118 et 137 MHz pour le trafic aéronautique). Sur ces bandes de fréquence particulières on observe sur les Figures 4 et 5 que les matériaux $Ni_{0,4405}Zn_{0,3195}Cu_{0,20}Co_{0,10}Fe_{1,96}O_4$ et $Ni_{0,6}Zn_{0,2}Cu_{0,20}Co_{0,06}Fe_{1,96}O_4$ présentent des performances avantageuses avec des pertes magnétiques $\tan(\delta_\mu) < 0{,}02$ et une perméabilité magnétique $\mu' \approx 15$.

Les Figures 7 et 8 présentent la permittivité relative et les pertes diélectriques des matériaux $Ni_{0,4405}Zn_{0,3195}Cu_{0,20}Co_{0,10}Fe_{1,96}O_4$ et $Ni_{0,6}Zn_{0,2}Cu_{0,20}Co_{0,06}Fe_{1,96}O_4$ sur la gamme de fréquence 100-200 MHz. Ils présentent des performances avantageuses avec des pertes diélectriques tan($\delta_\varepsilon$) < 0,006 et une constante diélectrique ε' ≈ 13-14.

Ces résultats supportent la portée de l'invention dans sa généralité. En particulier, les exemples supportent que le rapport Ni/Zn et le taux de cobalt définis selon l'invention permettent d'adapter le comportement visé. En partant d'une des compositions des exemples selon l'invention et en faisant varier un paramètre dans un sens et l'autre dans le sens opposé, cela permet d'atteindre un résultat similaire en terme de perméabilité magnétique μ', de permittivité diélectrique ε' et de pertes magnéto-diélectriques tan($\delta_\mu$) + tan($\delta_\varepsilon$). Ainsi, il existe un grand nombre de variantes de composition possibles possédant des performances similaires à celles présentées dans les exemples.

## Revendications

1. Composition de formule $Ni_aZn_bCu_cCo_dFe_{2-\delta}O_4$, dans laquelle :

$$2(a+b+c+d) + 3(2-\delta) = 8$$

   0,05 < b < 0,5, par exemple de 0,1 < b < 0,5, par exemple de 0,1 < b < 0,4, par exemple 0,15 < b < 0,35
   0,10 < c < 0,25, de préférence 0,15 < c < 0,25, selon une variante c vaut 0,20,
   0,04 < d < 0,25, de préférence 0,06 < d < 0,25, et encore de préférence 0,07 < d < 0,25, et
   δ < 0,05.

2. Composition selon la revendication 1, présentant un rapport Ni/Zn de 1 à 15.

3. Composition selon la revendication 1 ou 2, **caractérisée en ce que** la composition présente une structure spinelle.

4. Composition selon l'une quelconque des revendications 1 à 3, **caractérisée en ce que** la composition est choisie parmi les compositions de formules suivantes :

   $Ni_{0,4805}Zn_{0,3195}Cu_{0,20}Co_{0,06}Fe_{1,96}O_4$,

   $Ni_{0,4405}Zn_{0,3195}Cu_{0,20}Co_{0,10}Fe_{1,96}O_4$,

   $Ni_{0,4347}Zn_{0,3153}Cu_{0,20}Co_{0,11}Fe_{1,96}O_4$,

   $Ni_{0,4231}Zn_{0,3069}Cu_{0,20}Co_{0,13}Fe_{1,96}O_4$,

   $Ni_{0,4115}Zn_{0,2985}Cu_{0,20}Co_{0,15}Fe_{1,96}O_4$ ; et

   $Ni_{0,6}Zn_{0,2}Cu_{0,20}Co_{0,06}Fe_{1,96}O_4$.

5. Matériau solide **caractérisé en ce qu'**il présente une composition telle que définie selon l'une quelconque des revendications 1 à 4.

6. Matériau solide selon la revendication 5, **caractérisé en ce qu'**il forme un matériau magnéto-diélectrique, de préférence possédant une perméabilité magnétique μ' > 1 et une permittivité diélectrique ε' > 1, et de préférence μ' ≥ 5 et ε' ≥ 10.

7. Matériau solide selon la revendication 5 ou 6, **caractérisé en ce qu'**il présente une perméabilité magnétique μ' de 10 à 20 pour la gamme VHF (1 MHz à 300 MHz) ou μ' de 5 à 15 pour la gamme V/UHF (200 MHz à 600 MHz).

8. Matériau solide selon l'une quelconque des revendications 5 à 7, **caractérisé en ce qu'**il présente des pertes magnétiques tan($\delta_\mu$) < 0,06, et de préférence des pertes diélectriques tan($\delta_\varepsilon$) < 0,02 sur la bande de fréquence entre 100 et 200 MHz.

9. Antenne VHF ou V/UHF **caractérisée en ce qu'**elle comprend ou est constituée d'une composition selon l'une quelconque des revendications 1 à 4 ou d'un matériau solide selon l'une quelconque des revendications 5 à 8.

**10.** Antenne VHF ou V/UHF de type antenne imprimée ou micro-ruban, **caractérisée en ce qu'**elle comprend une ou plusieurs couches d'un substrat accolé à un élément rayonnant, dont une ou plusieurs couches du substrat est constituée ou comprend une composition selon l'une quelconque des revendications 1 à 4 ou un matériau solide selon l'une quelconque des revendications 5 à 8.

**11.** Antenne VHF ou V/UHF selon la revendication 9 ou 10, **caractérisée en ce qu'**elle présente une plus grande dimension inférieure à 300 mm.

**12.** Utilisation d'une composition selon l'une quelconque des revendications 1 à 4 ou d'un matériau solide selon l'une quelconque des revendications 5 à 8, comme antenne VHF ou V/UHF.

**13.** Procédé de fabrication d'une composition selon l'une quelconque des revendications 1 à 4 ou d'un matériau solide selon l'une quelconque des revendications 5 à 8, **caractérisé en ce que** ledit procédé comprend :

un broyage des matières premières apportant Ni, Zn, Cu, Co, Fe et O, typiquement NiO ; ZnO ; CuO ; $Co_3O_4$ et $Fe_2O_3$,
après broyage, la poudre est séchée puis tamisée de préférence avec un tamis à 400 µm,
après tamisage, la poudre est traitée thermiquement, de préférence à une température d'au moins 600 °C, et par exemple de 800 °C, par exemple pendant 1 à 10 h, typiquement 2 h,
après traitement thermique, la poudre subit un deuxième broyage, par exemple avec une mise en solution aqueuse,
puis la poudre est mise en forme pour obtenir un matériau solide.

**14.** Procédé selon la revendication 13, **caractérisé en ce qu'**avant mise en forme le procédé comprend un enrobage de la poudre avec un liant pour fournir un matériau mis en forme.

**15.** Procédé selon la revendication 13 ou 14, **caractérisé en ce qu'**après mise en forme le procédé comprend un frittage du matériau mis en forme.

FIG.1

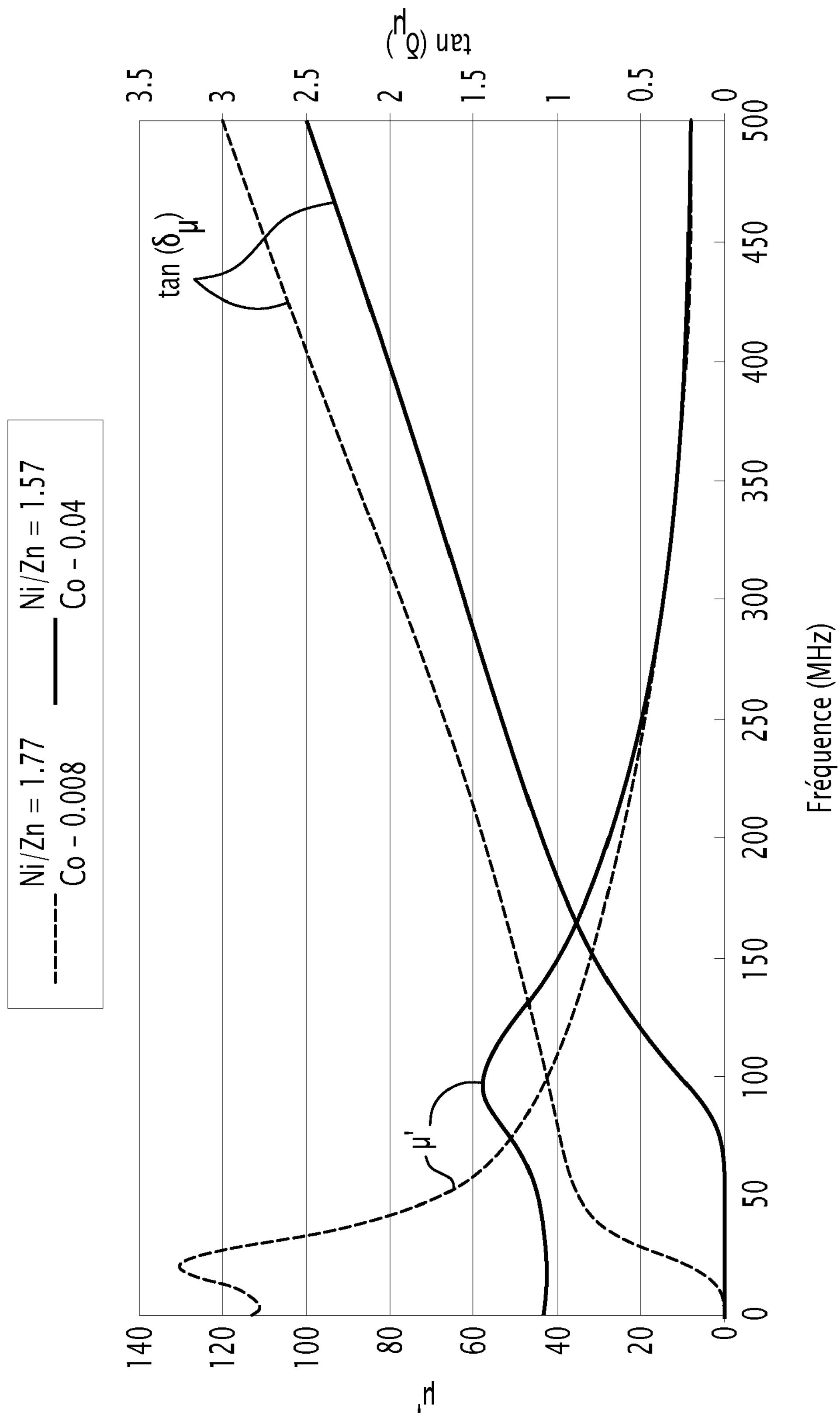
Ni/Zn = 1.77
Co - 0.008
Ni/Zn = 1.57
Co - 0.04
tan (δμ)
μ'
μ'
tan (δμ)
Fréquence (MHz)
0
50
100
150
200
250
300
350
400
450
500
0
20
40
60
80
100
120
140
0
0.5
1
1.5
2
2.5
3
3.5

FIG.2

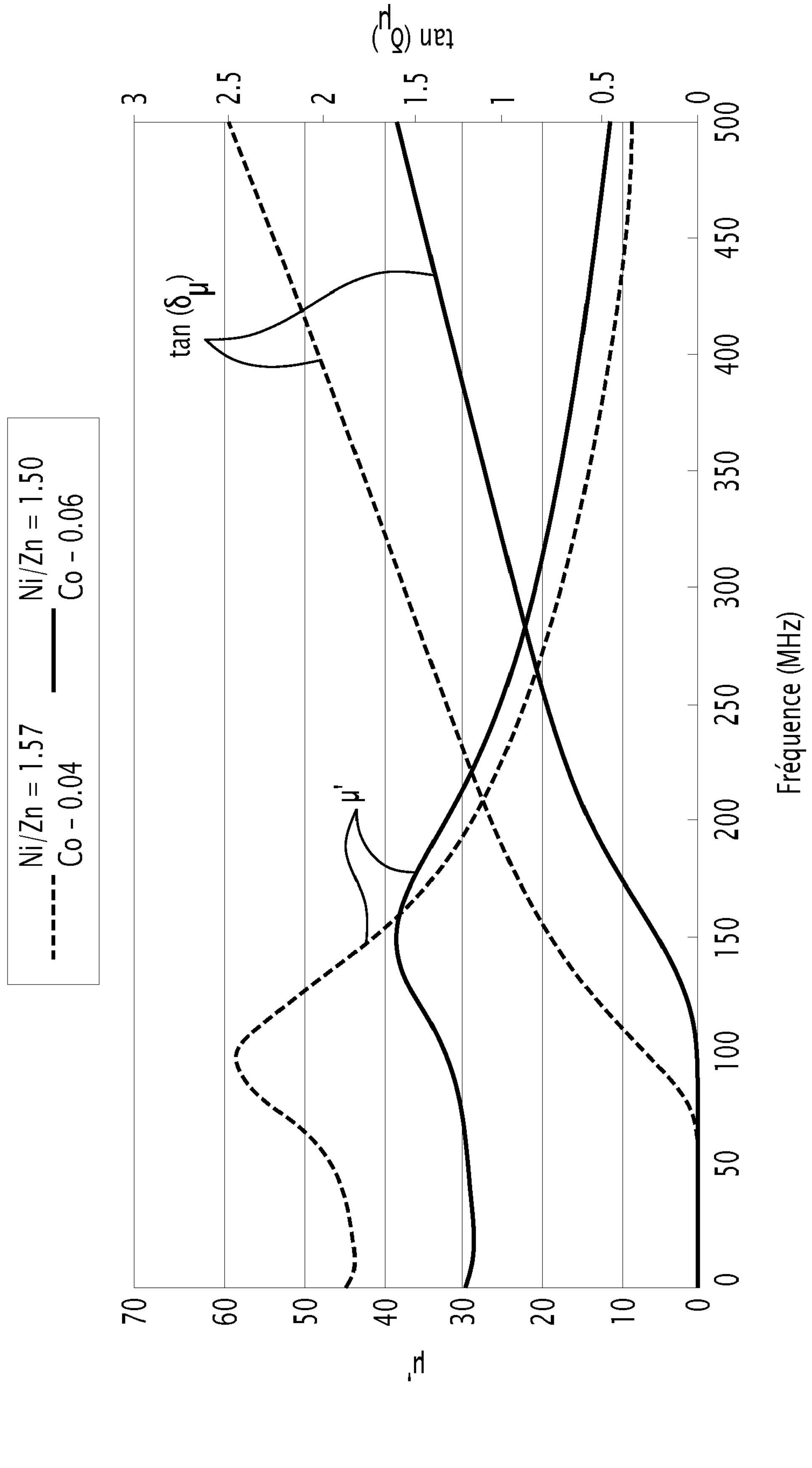
Ni/Zn = 1.57
Co - 0.04
Ni/Zn = 1.50
Co - 0.06
tan (δμ)
μ'
μ''
Fréquence (MHz)
0
50
100
150
200
250
300
350
400
450
500
70
60
50
40
30
20
10
0
3
2.5
2
1.5
1
0.5
0

FIG.3

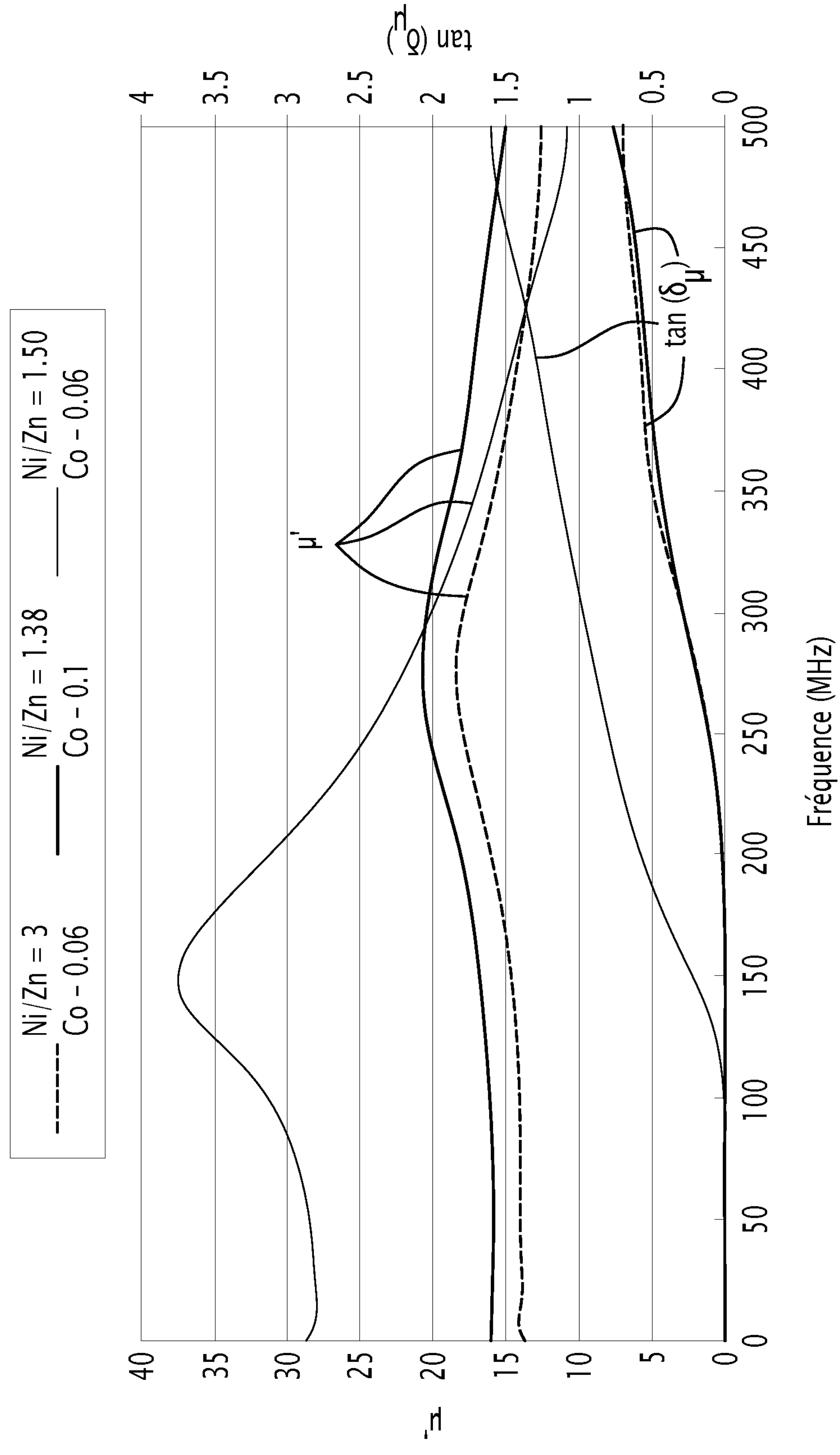
Ni/Zn = 3
Co - 0.06
Ni/Zn = 1.38
Co - 0.1
Ni/Zn = 1.50
Co - 0.06
μ'
tan (δμ)
Fréquence (MHz)
0
50
100
150
200
250
300
350
400
450
500
0
5
10
15
20
25
30
35
40
0.5
1
1.5
2
2.5
3
3.5
4

# FIG.4

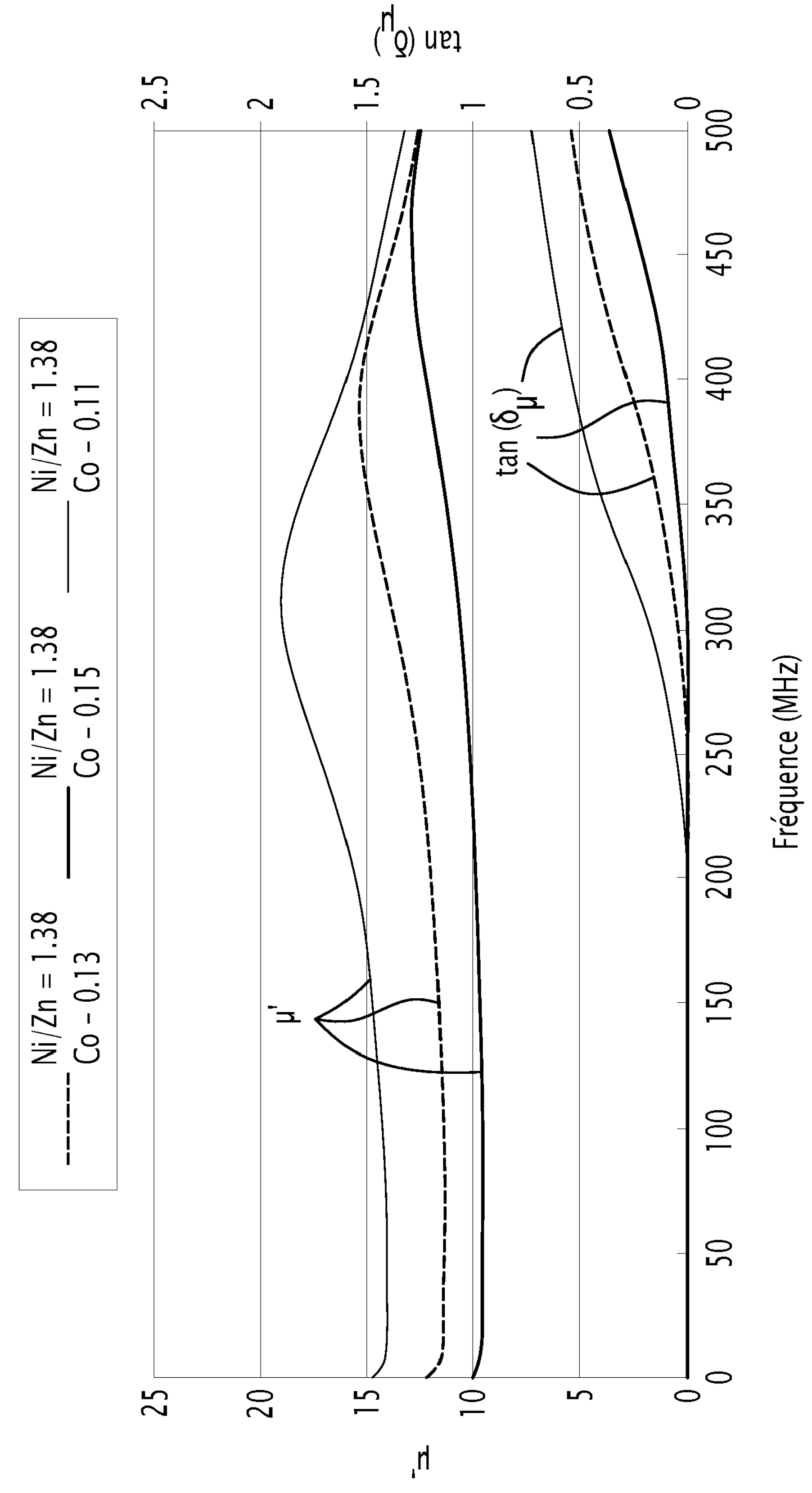
Ni/Zn = 1.38
Co - 0.13
Ni/Zn = 1.38
Co - 0.15
Ni/Zn = 1.38
Co - 0.11
μ'
tan (δμ)
Fréquence (MHz)
0
50
100
150
200
250
300
350
400
450
500
25
20
15
10
5
0
2.5
2
1.5
1
0.5
0

FIG.5

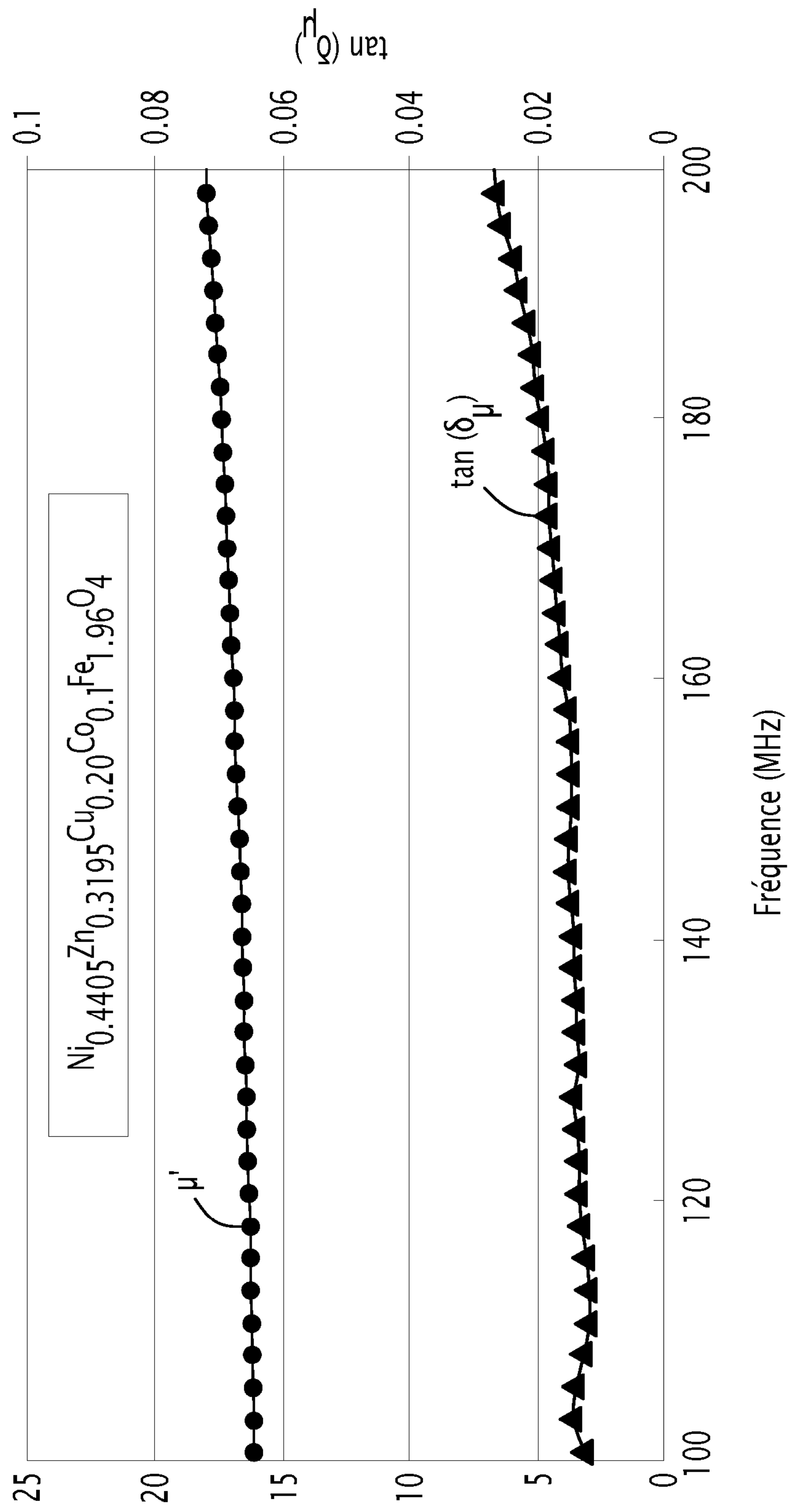
tan (δμ)
0.1
0.08
0.06
0.04
0.02
0
25
20
15
10
5
0
μ'
μ'
Ni0.4405Zn0.3195Cu0.20Co0.1Fe1.96O4
tan (δμ)
100
120
140
160
180
200
Fréquence (MHz)

FIG.6

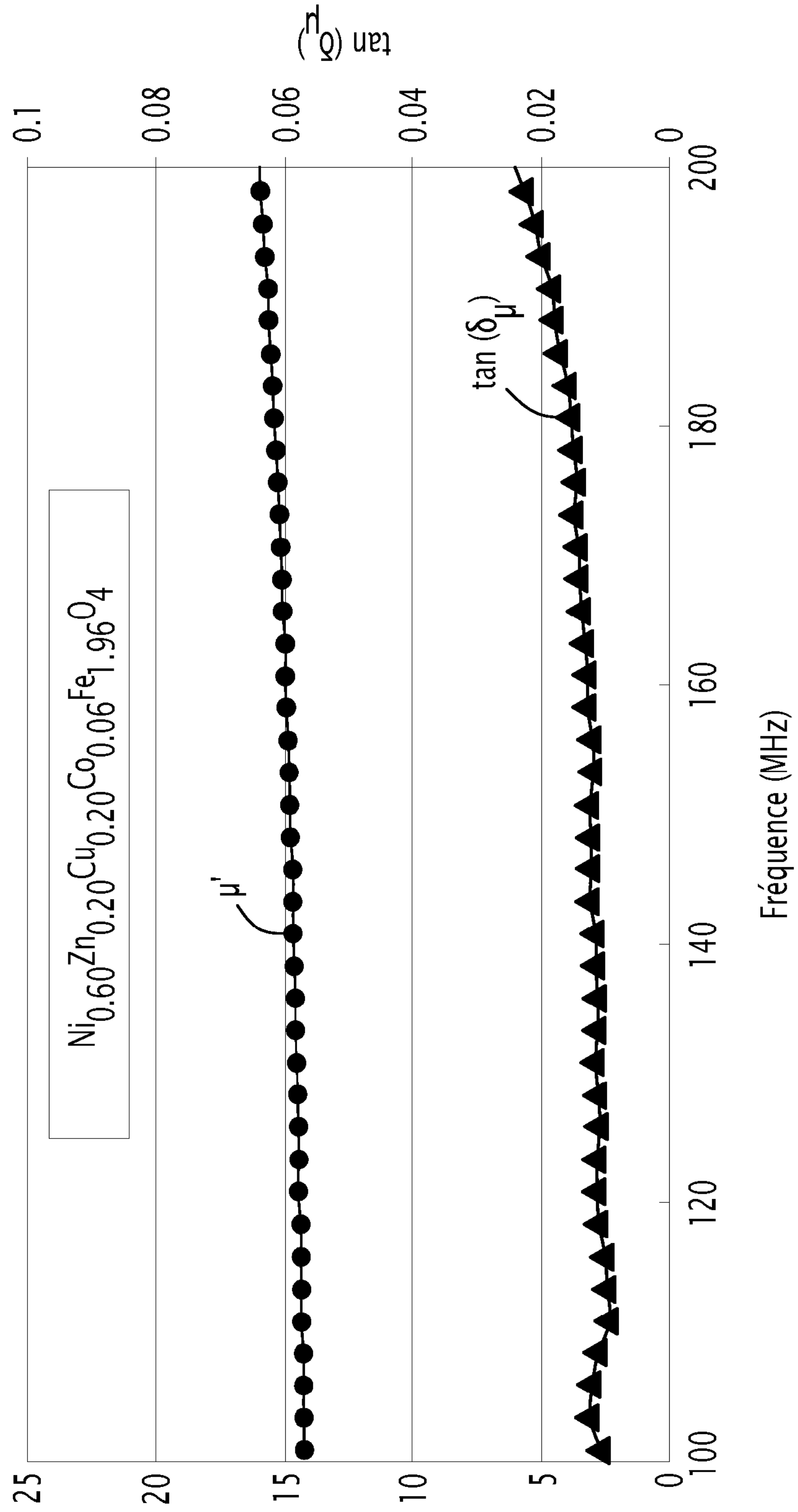
$Ni_{0.60}Zn_{0.20}Cu_{0.20}Co_{0.06}Fe_{1.96}O_4$
μ'
tan ($\delta_\mu$)
25
20
15
10
5
0
μ'
0.1
0.08
0.06
0.04
0.02
0
tan ($\delta_\mu$)
100
120
140
160
180
200
Fréquence (MHz)

FIG.7

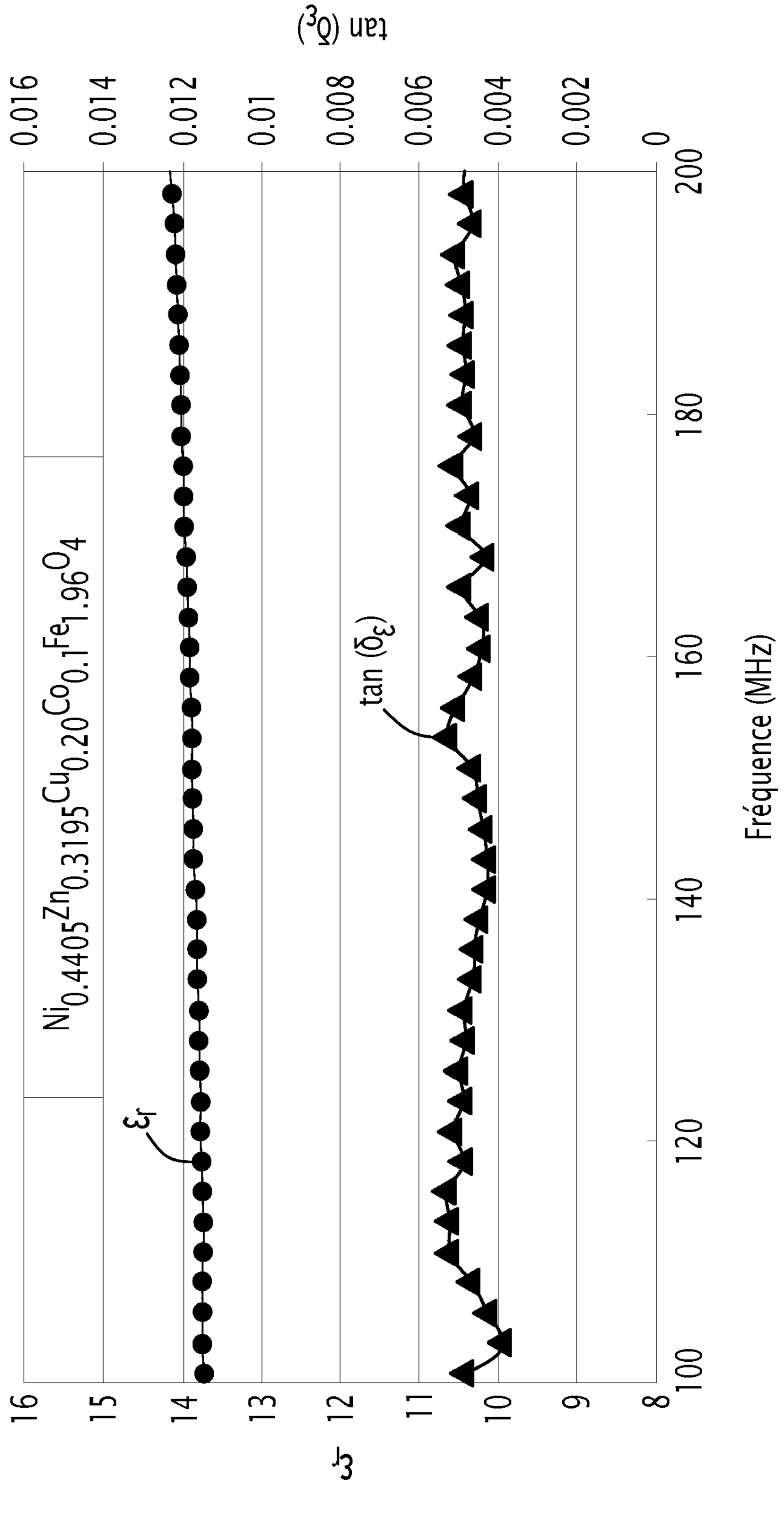

$Ni_{0.4405}Zn_{0.3195}Cu_{0.20}Co_{0.1}Fe_{1.96}O_4$
$\varepsilon_r$
tan ($\delta_\varepsilon$)
Fréquence (MHz)
100
120
140
160
180
200
16
15
14
13
12
11
10
9
8
0.016
0.014
0.012
0.01
0.008
0.006
0.004
0.002
0

FIG.8

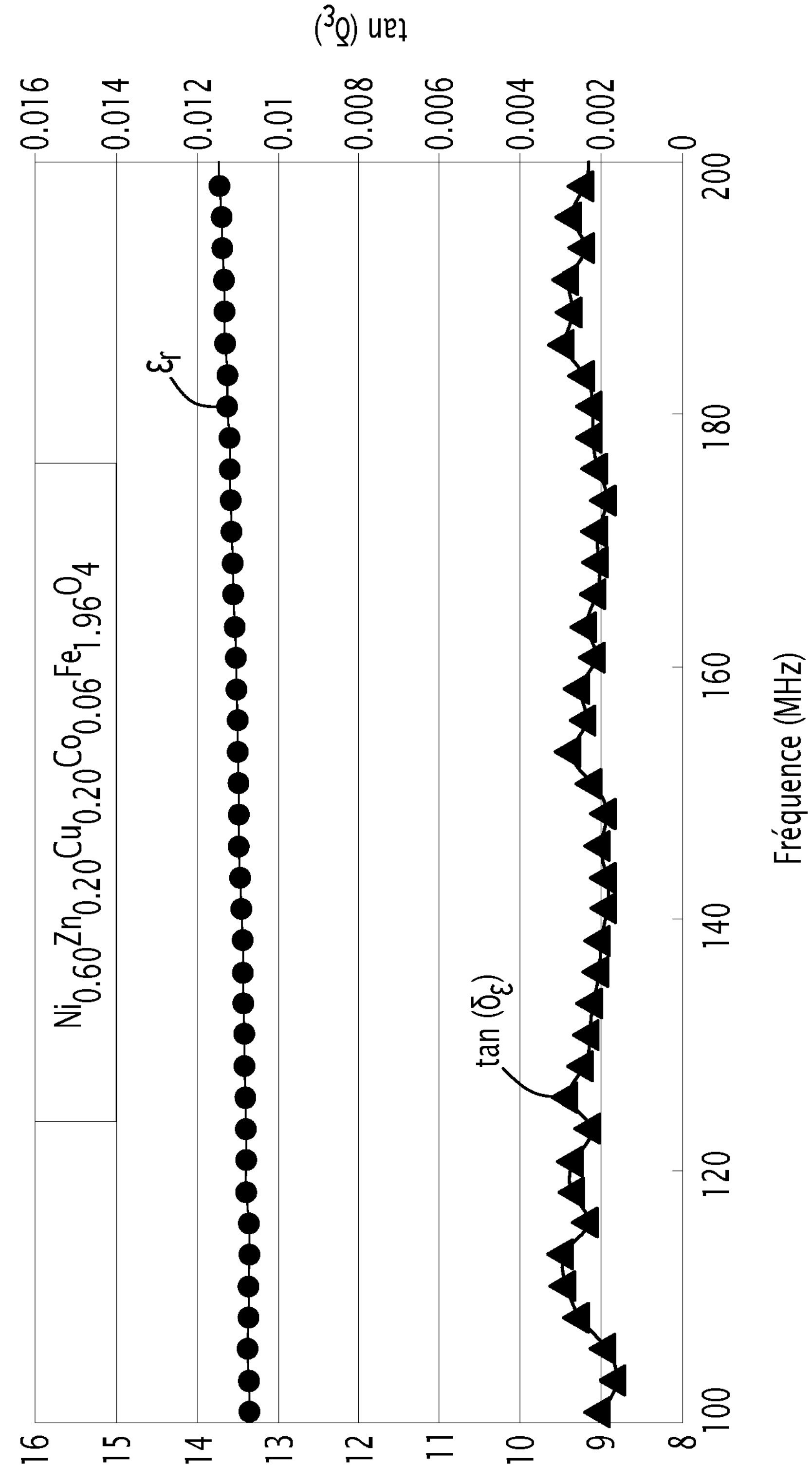

$\varepsilon_r$
16
15
14
13
12
11
10
9
8
tan ($\delta_\varepsilon$)
0.016
0.014
0.012
0.01
0.008
0.006
0.004
0.002
0
$Ni_{0.60}Zn_{0.20}Cu_{0.20}Co_{0.06}Fe_{1.96}O_4$
100
120
140
160
180
200
Fréquence (MHz)

Europäisches Patentamt
European Patent Office
Office européen des brevets

# RAPPORT DE RECHERCHE EUROPEENNE

Numéro de la demande
EP 22 16 9533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 0 800 183 A1 (THOMSON CSF [FR]) 8 octobre 1997 (1997-10-08) * colonne 2, lignes 41-44; revendication 1; figures 1,2; exemples 1,2 * * colonne 3, ligne 24 - colonne 4, ligne 15 * * colonne 5, lignes 17-46 * ----- | 1-15 | INV. C04B35/26 C04B35/626 C04B35/638 H01Q7/08 |
| X | EP 1 065 676 A1 (THOMSON CSF [FR]) 3 janvier 2001 (2001-01-03) * alinéas [0001], [0007], [0008], [0027] - [0035]; revendications 1-10; figure 5 * ----- | 1-15 | |
| A | US 2 995 517 A (CHARLES O'HARA) 8 août 1961 (1961-08-08) * exemple 1 * ----- | 1-15 | |
| A | ATUL THAKUR ET AL: "Smart magnetodielectric nano-materials for the very high frequency applications", JOURNAL OF ALLOYS AND COMPOUNDS, ELSEVIER SEQUOIA, LAUSANNE, CH, vol. 509, no. 17, février 2011 (2011-02), pages 5315-5319, XP028372582, ISSN: 0925-8388, DOI: 10.1016/J.JALLCOM.2011.02.021 [extrait le 2011-02-17] * abrégé * * 1."Introduction"; 4. "Conclusion" * ----- -/-- | 1-15 | DOMAINES TECHNIQUES RECHERCHES (IPC) C04B H01Q |

Le présent rapport a été établi pour toutes les revendications

1

| Lieu de la recherche | Date d'achèvement de la recherche | Examinateur |
|---|---|---|
| Munich | 30 août 2022 | Bonneau, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 22 16 9533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LI KAIWEI ET AL: "Tunable ferromagnetic resonance linewidth of cobalt-substituted NiCuZn ferrites", JOURNAL OF ALLOYS AND COMPOUNDS, vol. 752, juillet 2018 (2018-07), pages 395-401, XP055865513, CH ISSN: 0925-8388, DOI: 10.1016/j.jallcom.2018.04.057 * abrégé * ----- | 1-15 | |
| A | MUKESH C DIMRI ET AL: "Complex permittivity and permeability of Co-substituted NiCuZn ferrite at rf and microwave frequencies", JOURNAL OF ELECTROCERAMICS, KLUWER ACADEMIC PUBLISHERS, BO, vol. 16, no. 4, juillet 2006 (2006-07), pages 331-335, XP019450589, ISSN: 1573-8663, DOI: 10.1007/S10832-006-9874-4 * "Introduction"; "Experimental" * ----- -/-- | 1-15 | DOMAINES TECHNIQUES RECHERCHES (IPC) |

Le présent rapport a été établi pour toutes les revendications

1

| Lieu de la recherche | Date d'achèvement de la recherche | Examinateur |
|---|---|---|
| Munich | 30 août 2022 | Bonneau, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................................
& : membre de la même famille, document correspondant

EPO FORM 1503 03.82 (P04C02)

Europäisches Patentamt
European Patent Office
Office européen des brevets

# RAPPORT DE RECHERCHE EUROPEENNE

Numéro de la demande
EP 22 16 9533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | SOKA M. ET AL: "Microstructural and Magnetic Characteristics of Divalent Zn, Cu and Co-Doped Ni Ferrites", ACTA PHYSICA POLONICA. A , vol. 131, no. 4 13 juin 2017 (2017-06-13), pages 690-692, XP055865420, PL ISSN: 0587-4246, DOI: 10.12693/APhysPolA.131.690 Extrait de l'Internet: URL:http://przyrbwn.icm.edu.pl/APP/PDF/131/a131z4p026.pdf [extrait le 2021-11-24] * abrégé * ----- | 1-15 | |
| A | EP 2 982 651 A1 (SKYWORKS SOLUTIONS INC [US]) 10 février 2016 (2016-02-10) * alinéas [0020], [0024]; revendications 1,4 * ----- | 1-15 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 30 août 2022 | Bonneau, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................
& : membre de la même famille, document correspondant

1

EPO FORM 1503 03.82 (P04C02)

## ANNEXE AU RAPPORT DE RECHERCHE EUROPEENNE RELATIF A LA DEMANDE DE BREVET EUROPEEN NO.

EP 22 16 9533

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-08-2022

| Document brevet cité au rapport de recherche | Date de publication | Membre(s) de la famille de brevet(s) | Date de publication |
|---|---|---|---|
| EP 0800183 A1 | 08-10-1997 | DE 69706216 T2 | 23-05-2002 |
| | | EP 0800183 A1 | 08-10-1997 |
| | | FR 2747228 A1 | 10-10-1997 |
| | | JP H1041120 A | 13-02-1998 |
| | | KR 970071871 A | 07-11-1997 |
| | | US 6071430 A | 06-06-2000 |
| EP 1065676 A1 | 03-01-2001 | EP 1065676 A1 | 03-01-2001 |
| | | FR 2795855 A1 | 05-01-2001 |
| | | KR 20010066871 A | 11-07-2001 |
| | | US 6436307 B1 | 20-08-2002 |
| US 2995517 A | 08-08-1961 | AUCUN | |
| EP 2982651 A1 | 10-02-2016 | CN 105330275 A | 17-02-2016 |
| | | EP 2982651 A1 | 10-02-2016 |
| | | HK 1214809 A1 | 05-08-2016 |
| | | JP 6659264 B2 | 04-03-2020 |
| | | JP 2016037445 A | 22-03-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **M.A.C NIAMIEN ; S. COLLARDEY ; A. SHARAIHA ; K. MAHDJOUBI.** Compact Expressions for Efficiency and Bandwidth of Patch Antennas Over Lossy Magneto-Dielectric Materials. *IEEE antennas and wireless propaga. letters,* 2011, vol. 10, 63-66
- **J.G.M LAU ; A.L. STUIJTS.** Chimical Composition and High-Frequency Properties of Ni-Zn-Co Ferrites. *Philips Res. Repts,* 1966, vol. 21, 104-112
- **P. MATHUR ; A. THAKUR ; J.H. LEE ; M. SINGH.** Sustained electromagnetic properties of Ni-Zn-Co nanoferrites for the high-frequency applications. *Materials Letters,* 2010, vol. 64, 2738-2741
- **A. SAINI ; A. THAKUR ; P. THAKUR.** Matching permeability and permittivity of Ni0.5Zn0.3Co0.2In0.1Fe1.9O4 ferrite for substrate of large bandwidth miniaturized antenna. *J Mater Sci: Mater Electron,* 2016, vol. 27, 2816-2823
- **J.J. SHROTRI ; S.D. KULKARNI ; C.E. DESHPANDE ; A. MITRA ; S.R. SAINKAR ; P.S. ANIL KUMAR ; S.K. DATE.** Effect of Cu substitution on the magnetic and electrical properties of Ni-Zn ferrite synthesised by soft chemical method. *Materials Chemistry and Physics,* 1999, vol. 59, 1-5